# EUROPEAN PATENT APPLICATION

(11) **EP 0 552 821 A2**
(43) Date of publication of application: **28.07.1993**
(21) Application number: 93105401.9
(22) Date of filing: 08.05.1989
(51) Int. Cl.: G01N 21/62, G01N 21/64, G01N 21/65

(54) **Monitoring an apparatus which uses scanned radiation**

(30) Priority: 06.05.1988 GB 8810723; 06.05.1988 GB 8810724; 05.07.1988 GB 8815941; 07.07.1988 GB 8816156; 07.07.1988 GB 8816157; 07.07.1988 GB 8816164; 07.07.1988 GB 8816165; 07.07.1988 GB 8816167; 09.11.1988 GB 8826225; 23.03.1989 GB 8906853
(62) Divisional of application: 89304642.5
(71) Applicant: GERSAN ESTABLISHMENT, Fl-9490 Vaduz (LI)
(72) Inventor: Stewart, Andrew David Garry, Berkshire (GB); Smith, Robin Wyncliffe, Croydon, Surrey CR0 6XJ (GB); Smith, Martin Phillip, Wargrave, Berkshire RG10 8BB (GB); Brink, Daniel Johannes, The Willows, Pretoria R9A (ZA); Cooper, Martin, Marlow, Buckinghamshire SL7 2RE (GB); Welbourn, Christopher Mark, Tythebarn Cottage, Maidenhead, Berkshire, SL6 3QF (GB); Spear, Paul Martyn, Reading, Berkshire (GB)
(74) Representative: Lyndon-Stanford, Edward Willoughby Brooke

(57) **Abstract**

Diamonds are sorted from ore particles travelling on a wide belt 1 by scanning a line of radiation across the belt using a laser 3 and a scanning unit 4, narrow frequency band Raman emission being sensed using a photomultiplier tube 14. To avoid the signal changing due to dirt or incorrect operation of the laser or photomultiplier tube, there are monitoring means which include luminescing zones 21 on the irradiated line and absorbent zones 22 on the same line, with sensing means 20' for sensing radiation emitted from the zones 21, 22 and giving a signal when the radiation sensed from either zone differs from predetermined values.

## Description

### Background of the Invention

This invention relates to an apparatus for performing an examination by a procedure including scanning incident radiation along a line. Such apparatus is disclosed in EP-A-0 345 949, to which reference should be made. The invention is more particularly but not exclusively for identifying specific discrete objects or specific zones of an article. The apparatus was developed for sorting gemstones, and specifically diamonds, from gemstone-bearing ore; it may be applicable to sorting other gemstones or minerals, such as emeralds, rubies or zircons. However, the apparatus can be used generally for examining a large area, and less generally can be applied to identifying any suitable discrete objects, or can be used for general inspection techniques such as inspecting paper sheet material or quality control of castings or turbine blades, or examining metals for impurities, e.g. slag in steel, or detecting a gap in an anti-reflection coating on glass or in a diamond film on a loudspeaker cone, or examining filleted fish for freshness or the presence of bones (using ultra-violet radiation). The apparatus can be used for any suitable examination technique involving line scanning, e.g. a colour scan or a U.V. scan.

Much of the remainder of the description is particularly concerned with sensing or detecting Raman radiation on excitation with visible laser radiation, but the invention is applicable to any suitable exciting radiations, such as X-ray, visible, infra-red or ultra-violet radiation, produced by any suitable means. The emission can be detected in any suitable direction relative to the incident radiation, e.g. in the same direction (back illumination) or in the opposite direction (front illumination).

It is highly desirable to have on-line or self calibration, or monitoring, so that a signal is given when the performance changes, e.g. due to lenses becoming dirty, or the laser output changing or the photo-multiplier working incorrectly. Monitoring is disclosed in for instance GB 899 852, GB-A-2 018 984, US 4 200 801 and WO 86/07457.

### The Invention

The invention provides monitoring means as set forth in Claim 1 and a method as set forth in Claim 8. The remaining Claims set forth optional features of the invention.

Although examining along a line is referred to herein, it is in theory possible to examine an area having substantial width as well as length, using a suitable collection means, the line then just being one of many lines which together form the width. In general, the line need not be rectilinear.

As indicated above, the invention is not restricted to using visible wavelengths for the exciting radiation, or to utilising a Raman emission for the identification of the objects or zones. For instance, the exciting radiation can be X-rays, for example using a collimated wedge to give a wide fan of energy along said line, or even scanning along the line with say a galvo-scanner having a grazing incidence X-ray mirror; or can be ultra-violet or infra-red radiation, scanned along the line. If there is a long time constant after radiation (e.g. diamonds irradiated with X-rays), in a system where the objects or article quickly move out of the viewing zone, pre-radiation may be used to pre-excite the luminescence mechanism.

### Preferred Embodiment

In the embodiment of the invention described below, a large number of objects are distributed over an area, which is in effect rectangular and is shown as the surface of a belt though the objects could be moved in other ways. As the belt moves relative to (and at right angles to) the irradiated line, the whole area is scanned. The same effect occurs when examining an article.

The invention will be further described, by way of example, with reference to the accompanying drawings, in which:-
Figure 1 is a diagram of apparatus in accordance with the invention, and associated electronic components;
Figure 2 is a schematic plan view of the end of the belt in Figure 1;
Figure 3 illustrates the output of the PMT (photo-multiplier tube) of Figure 1.

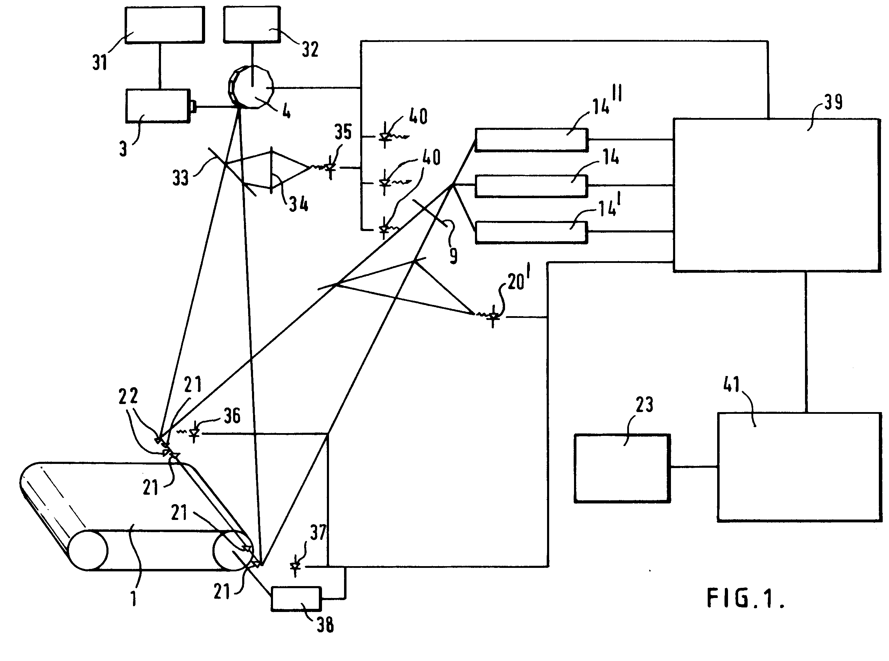

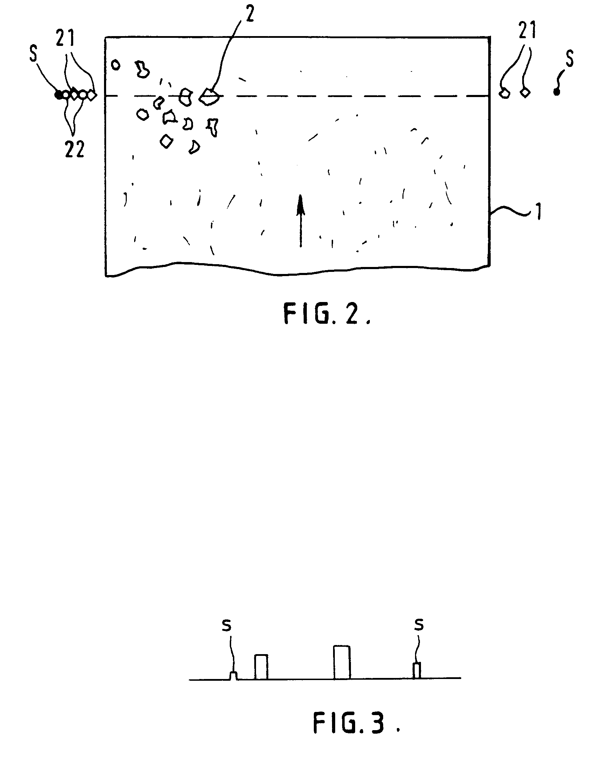

In Figures 1 and 2, a moving belt 1 (made of material which does not luminesce at the excitation frequency, i.e. at the frequency of the laser) which is wide, i.e. of substantial width, carries a single layer of ore or gangue particles or objects 2. In this way, the particles are distributed widthwise over and move along a path whose width is capable of accommodating a number of the particles 2. The particles 2 have been formed by roll crushing, and have been screened so that they are in a predetermined size range. In general terms, it is preferred that the particles 2 should be of roughly similar sizes and suitable (plan view) occupancy on the belt 1 to reduce the effects of piling or shielding - one suitable occupancy is 5%, but it could vary for example from 4% to 80%. The sizing and occupancy can be arranged using known mechanical means.

A laser 3 scans exciting radiation along an extended line transversely of the belt 1, using a scanning unit 4; the laser 3 can be say a 2 watt laser. The laser optics can be arranged in any suitable way and EP-A-O 345 949 can be referred to for more details.

As explained in EP-A-O 345 949, the line is examined with a viewing system having collection means, beam splitters, a narrow band pass or line filters 9, PMT's 14, 14', 14'', the PMT's 14, 14', 14'' being sensing means and sensing selected frequency radiations emitted by the particles 2.

Various techniques can be used to indicate or identify the particle 2 which emitted Raman radiation, and these are explained in EP-A-O 345 949.

There is a monitoring means for self-calibration on-line (i.e. without stopping sorting), or for giving a signal to indicate that there is a malfunction. A line S-S is scanned on the belt 1 from point S to point S.
On each side of the belt 1 there are first zones represented by tracer stones 21, which may be made of synthetic diamonds mixed with epoxy resin, on one side of the belt 1 there are two second zones or beam dumps in the form of holes 22 which absorb all radiation. Using a suitable detector, e.g. the CCD camera 20' shown in Figure 1, the radiation from the tracer stones 21 and holes 22 can be sensed and processed to give signals, automatically, e.g. to increase or decrease the gain of the PMT's 14, 14' and 14''. The signals generated by the tracer stones 21 and holes 22 can be integrated over say 6 seconds to reduce random effects.

There is a row of air jets 23 for sorting diamonds by blowing them out of the trajectory followed by non-diamond material into a diamond-receiving bin 24; naturally any other particle that also meets the selected criteria will also be selected.

Figure 1 illustrates the identification and control system. The following further items are illustrated in Figure 1, but their function and interconnection need not be described in detail: laser drive and shutter control 31, scan (polygon) motor drive 32, beam splitter 33, grating 34 and associated lens system, photo sensor 35, start and end of scan detectors 36, 37, belt speed encoder 38, measurement and test module 39 (a microprocessor), test light emitting diodes 40, and air jet control system 41.

Any suitable scan frequency can be used for the radiation. The scan will normally be simple direction without fly-back, e.g. using a rotating 64 facet polyhedric mirror as the scanning unit 4. Assuming point focus (which could be in a plane spaced above the belt at half the expected particle height), a 133 Hz scan at a belt speed of 1.6 m/s and with a 300 mm scan width gives 1/2 mm resolution, suitable for 1 mm particles; a 400 Hz scan at a belt speed of 5 m/s and with a 1000 mm scan length gives 1 mm resolution, suitable for 3 mm particles.

The present invention has been described above purely by way of example, and modifications can be made within the invention.

## Claims

1. Monitoring means for an apparatus for performing an examination and which includes scanning means (3,4) for scanning incident radiation along a line, characterised in that the monitoring means comprising a first zone (21) on said line, which first zone (21) emits radiation when it receives the incident radiation, a second zone (22) on said line, which second zone (22) absorbs substantially all or a large proportion of the incident radiation and emits little, or substantially no, radiation, at least in a predetermined frequency band, when it receives the incident radiation, and sensing means (20') for sensing radiation emitted from the first zone (21) and from the second zone (22), and giving a signal when the radiation sensed from either zone (21, 22) differs from predetermined values.

2. The monitoring means of Claim 1, and associated with apparatus for examining or detecting diamonds or other specific luminescing minerals, among ore particles (2), said scanning means (3,4) being for irradiating the ore particles (2) with radiation which excites Raman emission, the apparatus comprising means (9,14) for detecting the emission of the Raman emission which is characteristic of the diamonds or luminescing minerals.

3. The monitoring means of Claim 1, and associated with apparatus for examining a large number of objects (2) distributed over an area or for examining an article, in order to identify specific objects (2) or zones which respond to the incident radiation by emitting luminescence, the apparatus comprising means (1) for inducing relative movement between the position of said line and said area or article, to thereby scan said area or article, and detecting means for detecting emitted luminescence, the detecting means being responsive to the location from which the luminescence is emitted, to thereby identify the location of the specific object or zone.

4. The monitoring means of any of the preceding Claims, wherein said first zone (21) is adjacent one end of said line and said second zone (22) is adjacent the other end of said line.

5. The monitoring means of any of the preceding Claims, wherein there are said first zones (21) adjacent respective ends of said line.

6. The monitoring means of any of the preceding Claims, wherein the or each first zone (21) is adjacent another first zone (21) and the second zone (21) is adjacent another second zone (22).

7. The monitoring means of any of the preceding Claims, and comprising means (39) for integrating signals responsive to radiation emitted by the first and second zones (21, 22) over a number of scans of said scanning means.

8. A method of monitoring an apparatus which is performing an examination by a procedure including scanning (3,4) incident radiation along a line, characterised in that the method comprises sensing radiation emitted from a first zone (21) on said line, which first zone (21) emits radiation when it receives the incident radiation, and from a second zone (22) on said line, which second zone (22) absorbs a large proportion, or substantially all, the incident radiation and emits little, or substantially no, radiation, at least in a predetermined frequency band, when it receives the incident radiation, sensing (20') the radiation emitted from the first zone (21) and from the second zone (22), and giving a signal when the radiation sensed from the first zone (21) or from the second zone (22) differs from respective predetermined values.

9. The method of Claim 8, and carried out using the apparatus of any of Claims 2 to 7.

10. The method of any of Claims 5 to 9, and used in the identification of diamonds or other specific luminescing minerals in ore particles (2) moving in a path whose width is capable of accommodating a number of the particles.

11. The method of Claim 10, and used for the identification of diamonds, wherein said first zone (21) comprises diamond.
